# EUROPÄISCHE PATENTANMELDUNG

(11) **EP 2 030 773 A1**
(43) Veröffentlichungstag der Anmeldung: **04.03.2009**
(21) Anmeldenummer: 08012478.7
(22) Anmeldetag: 10.07.2008
(51) Int. Cl.: B31B 1/28, B31F 1/00

(54) **Einrichtung zum automatischen Herstellen einer Folienröhre aus einem Folienabschnitt**

(30) Priorität: 30.07.2007 DE 202007010706 U; 31.08.2007 DE 202007012262 U
(71) Anmelder: Laudenberg Verpackungsmaschinen GmbH, 51688 Wipperfürth (DE)
(72) Erfinder: Beinghaus, Jürgen, 51688 Wipperfürth (DE); Schmitz, Albert, 51515 Kürten (DE)
(74) Vertreter: Tönhardt, Marion

(57) **Zusammenfassung**

Die Erfindung beschreibt eine Einrichtung zum automatischen Herstellen einer Folienröhre aus einem Folienabschnitt, mit einer im wesentlichen zylindrische Formröhre (10, 20), die in axialer Richtung zweigeteilt ist, wobei eine Formröhrenhälfte (10) senkrecht zur Achse der Formröhre verfahrbar ist und die andere Formröhrenhälfte (20) stationär ist, einer Faltvorrichtung (50), welche zwei Faltabschnitte (52, 54; 152, 154) aufweist, die zur Formröhre hin und von dieser weg verfahrbar sind und die unabhängig voneinander zum Umschließen der Formröhre (10, 20) antreibbar sind, einer feststehenden Siegelbacke (110) innerhalb der Formröhre und einer bewegbaren, außerhalb der Formröhre befindlichen Siegelbacke (130), die zum Erzeugen einer Längssiegelnaht für eine Folienröhre zusammenwirken, wobei die stationäre Formröhrenhälfte (20) eine die Lage der Längssiegelnaht definierende Aussparung (22) aufweist.

## Beschreibung

Die Erfindung betrifft eine Einrichtung zum automatischen Herstellen einer Folienröhre aus einem Folienabschnitt, wobei der Folienabschnitt vorab von einem sogenannten "endlosen" Folienstrang abgetrennt wird. Dazu wird der endlose Folienstrang von einer Rolle mit einem entsprechenden Folienvorschub abgewickelt und an einer Messerstation geschnitten. Die erforderliche Ausstattung hierfür ist bekannt und wird in am Markt erhältlichen Maschinen im Zusammenhang mit der Herstellung von Flachbeuteln eingesetzt.

Es ist die Aufgabe der Erfindung, eine Einrichtung zur Verfügung zu stellen, mit der aus einem solchen Folienabschnitt eine Folienröhre erzeugt werden kann.

Diese Aufgabe wird von einer Einrichtung nach Anspruch 1 gelöst. Vorteilhafte Ausgestaltungen sind Gegenstand der Unteransprüche.

Erfindungsgemäß weist eine Einrichtung zum automatischen Herstellen einer Folienröhre aus einem Folienabschnitt eine im wesentlichen zylindrische Formröhre auf, die in axialer Richtung zweigeteilt ist, wobei eine Formröhrenhälfte senkrecht zur Achse der Formröhre verfahrbar ist und die andere Formröhrenhälfte stationär ist. Weiter ist eine Faltvorrichtung vorgesehen, welche zwei Faltabschnitte umfaßt, die zur Formröhre hin und von dieser weg verfahrbar sind und die unabhängig voneinander zum Umschließen der Formröhre antreibbar sind. Innerhalb der Formröhre ist eine feststehende Siegelbacke angeordnet, die mit einer bewegbaren Siegelbacke zum Erzeugen einer Längssiegelnaht für eine Folienröhre zusammenwirkt. Die bewegbare Siegelbacke befindet sich dabei außerhalb der Formröhre. Schließlich weist die stationäre Formröhrenhälfte eine die Lage der Längssiegelnaht definierende Aussparung auf. Da die Faltabschnitte unabhängig voneinander antreibbar sind, ist beim Falten eines Folienabschnittes um die Formröhre eindeutig definiert, welches Folienende im Überlappungsbereich innen oder außen liegt. Durch die geteilte Ausgestaltung der Formröhre kann auf unterschiedliche Folienqualitäten fein einjustiert werden, wobei der theoretische Folienröhrendurchmesser verändert wird. Die Faltvorrichtung wird so betrieben, daß der Überlappungsbereich der Folie über der Aussparung liegt, so daß die Siegelfläche der feststehenden Siegelbacke mit der Folie Kontakt bekommt. Zum Herstellen der Längssiegelnaht wird die bewegliche Siegelbacke dann an die feststehende Siegelbacke herangefahren, wobei Druck, Temperatur und Siegelzeit stufenlos einstellbar sind.

Nach einer ersten Ausgestaltung der Erfindung sind die Faltabschnitte Faltklauen, die bevorzugt mehrere voneinander beabstandete, gekrümmte Finger aufweisen, welche sich mit dem dazwischen liegenden Folienabschnitt um die Formröhre legen können.

Nach einer alternativen Ausgestaltung sind die Faltabschnitte durch Bereiche eines Faltvorhangs definiert, der zweckmäßigerweise rechtwinklig ist, wobei die Bereiche im wesentlichen durch die Längssymmetrieachse des Faltvorhanges voneinander getrennt sind.

Nach einer bevorzugten Ausgestaltung sind bei der erfindungsgemäßen Einrichtung die beiden Formröhrenhälften mit einer integrierten Wasserkühlung ausgerüstet. Damit wird verhindert, daß die im Innern der Röhre angeordnete Heizbacke die Formröhre aufheizt, wodurch die Folie an der Formröhre anhaften könnte.

Weiter vorteilhaft wird die verfahrbare Formröhrenhälfte mittels einer verfahrbaren Abstüztung während des Siegelvorganges stabilisiert.

Ebenso kann die feststehende Siegelbacke mittels einer verfahrbaren Abstützung während des Siegelvorganges stabilisiert werden.

Im folgenden soll die Erfindung anhand der beigefügte Zeichnung näher beschrieben werden. Dabei zeigt:
- Figur 1: eine Ausführungsform einer Einrichtung zum automatischen Herstellen einer Folienröhre aus einem Folienabschnitt in geöffnetem Zustand;
- Figur 2: die Einrichtung der Figur 1 in geschlossenem Zustand;
- Figur 3: eine weitere Ausführungsform einer Einrichtung zum automatischen Herstellen einer Folienröhre aus einem Folienabschnitt in geöffnetem Zustand; und
- Figur 4: die Einrichtung der Figur 3 in geschlossenem Zustand.

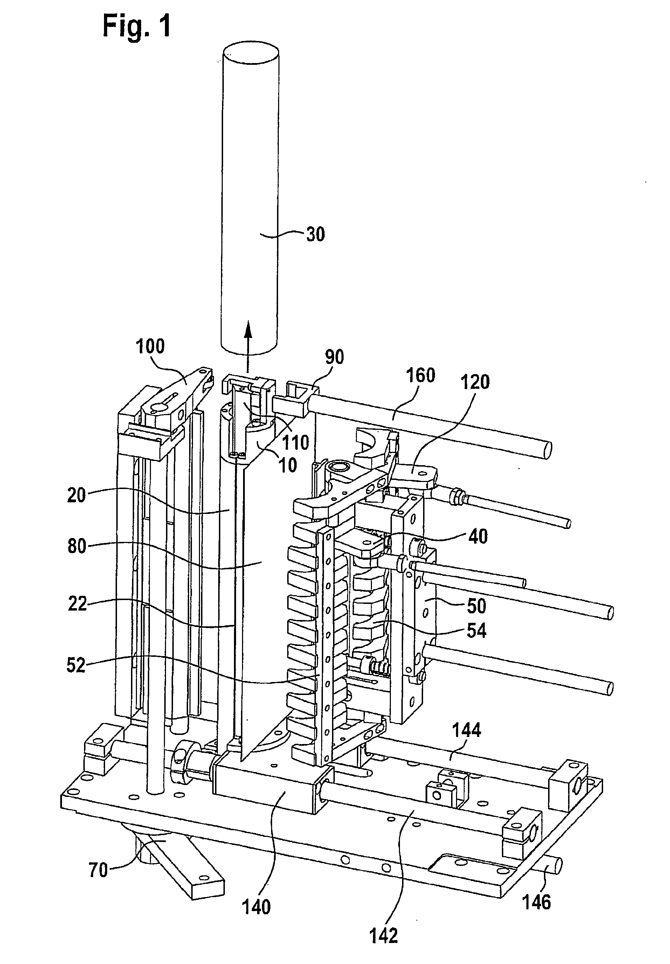

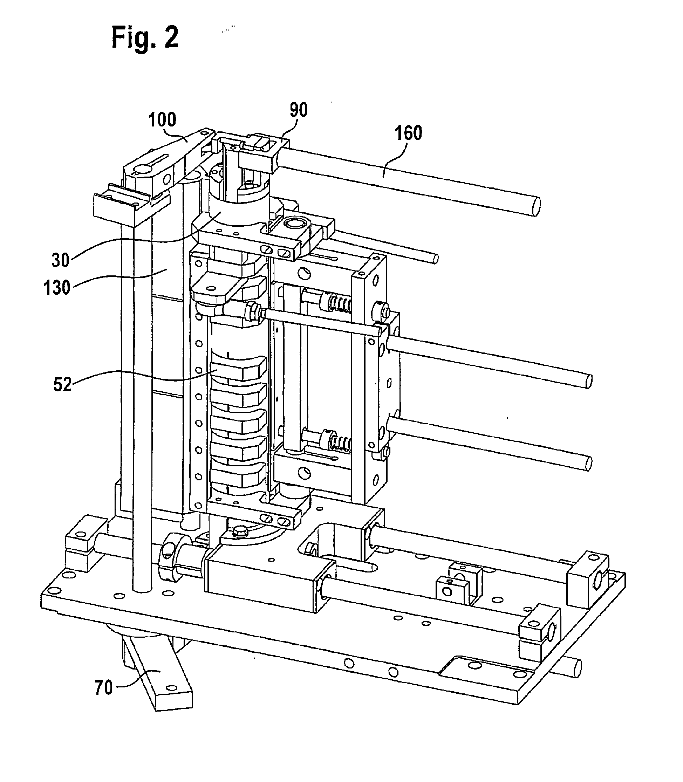

In offenem Zustand der Einrichtung zum automatischen Herstellen einer Folienröhre, in Figur 1 veranschaulicht, wird ein Folienabschnitt 80, der beispielsweise über eine servomotorische Lineareinheit, die nicht dargestellt ist, aus einer Messerstation abgeholt worden ist, in eine Faltposition gebracht, in der er sich zwischen einer aufrecht stehenden, zweigeteilten Formröhre 10, 20 und einer Faltvorrichtung 50 befindet. Die Formröhre weist eine verfahrbare Formröhrenhälfte 10 auf, die auf einem einen Teil einer Verstelleinrichtung bildenden Sockel 140 verfahrbar ist, der mittels einer Spindel 146 entlang zweier Stangen 142, 144 bewegt werden kann. Hiermit ist eine feine Einjustierung auf unterschiedliche Folienqualitäten möglich. Die beiden Formröhrenhälften 10, 20 bilden einen Zylinder, in dessen Inneren eine feststehende Siegelbacke 110 so angeordnet ist, daß sie sich hinter einer Aussparung 22 an der stationären Formröhrenhälfte 20 befindet, damit sie im Kontakt mit dem anliegenden Folienende des Folienabschnittes 80 ist. Die Aussparung 22 definiert später die Längssiegelnaht der herzustellenden Folienröhre. Die Einrichtung der Figur 1 wird geschlossen, indem die Faltvorrichtung 50 auf die Formröhre 10, 20 zu verfahren wird. Dabei sind zwei Faltklauen 52, 54, die mehrere voneinander beabstandete, gekrümmte Finger aufweisen, unabhängig voneinander durch einen jeweils zugeordneten Antrieb 40, 120 bewegbar, so daß eindeutig zu definieren ist, welches Folienende des Folienabschnittes 80 nach der paßgenauen Faltung innen und außen ist. Durch Heranfahren einer beweglichen Siegelbacke 130 an die feststehende Siegelbacke 110 und Heizen der beiden Siegelbacken 110, 130 wird die Längssiegelnaht hergestellt. Während des Siegelvorganges wird die bewegbare Formröhrenhälfte 10 durch eine Abstützung 90 stabilisiert, die in Form einer gabelartigen Aussparung den oberen Bereich der Formröhrenhälfte 10 hält. Die Abstützung 90 wird dabei von einem hier nur schematisch veranschaulichten Antrieb 160 in die Stabilisierposition und nach dem Siegelvorgang aus der Stabilisierposition verfahren. In ähnlicher Weise stabilisiert eine Abstützung 100, die durch einen Antrieb 70 zu verschwenken ist, die feststehende Siegelbacke 110. Die geschlosene Einrichtung ist in Figur 2 gezeigt.

Nach dem Siegelvorgang öffnen sich die Faltklauen 52, 54 und werden zurückgefahren. Der nun fertiggestellte Folienbeutel 30 kann nun, wie schematisch in Figur 1 gezeigt, beispielsweise mittels einer nicht dargestellten Greiferzange in eine Halte- und Transporteinrichtung gezogen werden. Ein mögliches Anhaften des Folienbeutels 30 an der Formröhre ist durch in die Formröhrenhälfte 10, 20 integrierte Wasserkühlung vermieden worden.

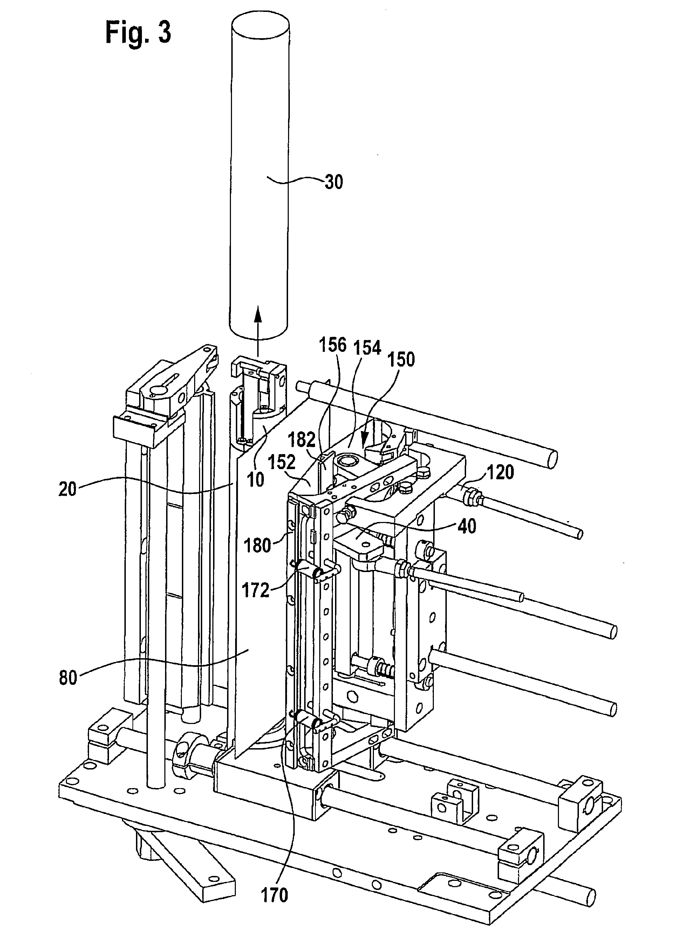

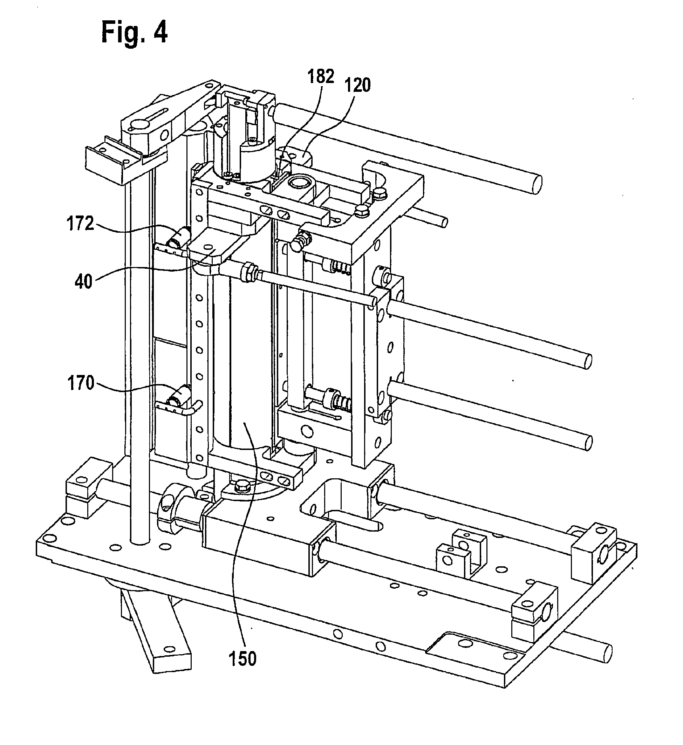

Die Figuren 3 und 4 zeigen eine weitere Ausführungsform einer Einrichtung zum automatischen Herstellen einer Folienröhre, bei der die Funktion der Faltklauen durch einen Faltvorhang 150 ersetzt ist, der mittels Federn 170, 172 an beiden Längskanten über einen Rahmen gespannt ist. Der Faltvorhang 150, der vorzugsweise aus Teflonseide besteht, ist im wesentlichen rechtwinklig und wird durch seine Längsmittelachse 156 in zwei Bereiche 152 geteilt, die, wie bei der Ausführungsform nach Figur 1, unabhängig voneinander durch einen jeweils zugeordneten Antrieb 40, 120 bewegbar sind, so daß wiederum ein gleichmäßiges Falten des Folienabschnittes 80 an die Formröhre 10, 20 erreicht wird. Der Faltvorhang 150 liegt in der geöffneten Stellung an einer Andrückleiste 182 an. Dabei liegt der Folienabschnitt 80 spielfrei am gesamten Umfang der Formröhre 10, 20 an, wobei wiederum in einem Überlappungsbereich der Folienenden eine Längssiegelnaht hergestellt wird, wie es im Zusammenhang mit der Ausführungsform nach den Figuren 1 und 2 erläutert ist. In der weiteren baulichen Ausgestaltung, insbesondere was die Ausgestaltung der Formröhre 10, 20 betrifft, stimmt die Ausführungsform nach den Figuren 3 und 4 mit der nach den Figuren 1 und 2 überein.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Einrichtung zum automatischen Herstellen einer Folienröhre aus einem Folienabschnitt, mit
einer im wesentlichen zylindrische Formröhre (10, 20), die in axialer Richtung zweigeteilt ist, wobei eine Formröhrenhälfte (10) senkrecht zur Achse der Formröhre verfahrbar ist und die andere Formröhrenhälfte (20) stationär ist,
einer Faltvorrichtung (50), welche zwei Faltabschnitte (52, 54; 152, 154) aufweist, die zur Formröhre hin und von dieser weg verfahrbar sind und die unabhängig voneinander zum Umschließen der Formröhre (10, 20) antreibbar sind,
einer feststehenden Siegelbacke (110) innerhalb der Formröhre und einer bewegbaren, außerhalb der Formröhre befindlichen Siegelbacke (130), die zum Erzeugen einer Längssiegelnaht für eine Folienröhre zusammenwirken,
wobei die stationäre Formröhrenhälfte (20) eine die Lage der Längssiegelnaht definierende Aussparung (22) aufweist.

2. Einrichtung nach Anspruch 1, **dadurch gekennzeichnet, daß** die Faltabschnitte Faltklauen (52, 54) sind.

3. Einrichtung nach Anspruch 1, **dadurch gekennzeichnet, daß** die Faltabschnitte durch Bereiche (152, 154) eines Faltvorhangs (150) definiert sind.

4. Einrichtung nach Anspruch 1, bei der die Formröhrenhälften (10, 20) mit einer integrierten Wasserkühlung ausgerüstet sind.

5. Einrichtung nach Anspruch 1 oder 2, bei der die verfahrbare Formröhrenhälfte (10) mittels einer verfahrbaren Abstützung (90) während des Siegelvorganges zu stabilisieren ist.

6. Einrichtung nach einem der Ansprüche 1 bis 3, bei der die feststehende Siegelbacke (110) mittels einer verfahrbaren Abstützung (100) während des Siegelvorganges zu stabilisieren ist.
